# EUROPÄISCHE PATENTANMELDUNG

(11) **EP 1 312 272 A2**
(43) Veröffentlichungstag der Anmeldung: **21.05.2003**
(21) Anmeldenummer: 02025403.3
(22) Anmeldetag: 14.11.2002
(51) Int. Cl.: A41D 31/02, B32B 27/12, C09D 175/00, C08J 5/18, B01D 71/54

(54) **Kunststoffmembran, deren Herstellung und Verwendung**

(30) Priorität: 14.11.2001 DE 10155756; 08.03.2002 DE 10210067
(71) Anmelder: Küsters, Peter, 60594 Frankfurt am Main (DE)
(72) Erfinder: Hofmann, Sylvia, 60594 Frankfurt/Main (DE)
(74) Vertreter: Jacobi, Markus A., Dr.

(57) **Zusammenfassung**

Die Erfindung betrifft eine Membran auf Kunststoffbasis herstellbar ausgehend von mindestens 70 Volumenprozent zweier Polyurethane PU (A) und PU (B) sowie 2 bis 10 Volumenprozent eines pulverförmigen Pigments (WP) sowie weiteren Komponenten, wobei diese Membran zur Beschichtung von Textilien sowie zur Herstellung von Verbundwerkstoffen besonders geeignet ist.

## Beschreibung

Die vorliegende Erfindung betrifft eine Membran auf Kunststoffbasis, ein Verfahren zur Herstellung dieser Membran und deren Verwendung.

Membranen auf Kunststoffbasis finden im wachsenden Umfang Einsatz in vielen Bereichen wie z. B. bei der Herstellung regenfester Kleidung, schmutzabweisender Folien oder kälteisolierender Decken. Während man früher häufig Membranen auf PVC (Polyvinylchlorid)-Basis einsetzte, um Textilien mit einer wasserabweisenden Membrane zu überziehen, haben sich in den letzten Jahren Kunststoffe wie Polyurethane als günstige Ausgangsstoffe zur Herstellung von Membranen erwiesen.

Eine Aufgabe der vorliegenden Erfindung ist die Bereitstellung einer einfach und kostengünstig herzustellenden Membran, die ein verbessertes Wärmedurchgangsverhalten zeigt und die die Herstellung von neuartigen Verbundwerkstoffen ermöglicht.

Die Aufgabe wird gelöst durch ein Membran auf Kunststoffbasis, die herstellbar ist ausgehend von mindestens 70 Volumenprozent mindestens zweier Polyurethane PU (A) und PU (B) sowie 2 bis 10 Volumenprozent eines pulverförmigen Pigments (WP) sowie gegebenenfalls weiteren Komponenten. Bei den nachfolgenden Angaben von Volumenprozent sind diese immer bezogen auf das Gesamtvolumen der Mischung aller Komponenten.

Vorzugsweise werden die Polyurethane PU (A) und PU (B) in einem Volumenverhältnis von etwa 1 zu 1 (vorzugsweise 0,9 : 1,0 Vol-% bis 1,0 : 0,9 Vol-%) eingesetzt. Als Polyurethane können handelsübliche Polyurethane (beispielsweise von UCB S.A., 1620 Drogenbos, Belgien oder von Bayer AG, Leverkusen) eingesetzt werden, (z. B. Ucecoat, Gardner's Entry Number 32714; Register Information Gardner Chemical Synonyms Trade Names, ISBN 0566081903).

In einer weiteren Ausführungsform werden als Polyurethane PU (A) und PU (B) zwei aromatische Polyurethane eingesetzt.

Die Polyurethane können in einem organischen Lösungsmittel, vorzugsweise in Dimethylformamid (DMF), gelöst und dann mit dem pulverförmigen Pigment (WP), vorzugsweise einem handelsüblichen Weißpigmentpulver (z. B. Hersteller Embapur 050/1101; Bayer AG, Leverkusen), sowie ggf. weiteren Komponenten versetzt werden.

Das pulverförmige Pigment (WP) ist vorzugsweise ein Pigment auf Titanoxid-Basis, welches als weitere Bestandteile u. a. Aluminiumoxid und Siliziumdioxid enthalten kann. Es weist in der Regel ein hohes Deckvermögen, eine gute Lichtbeständigkeit und eine leichte Dispergierbarkeit auf. Als weiteres Beispiel für des Pigment (WP) sei das mikronisierte Rutil-Pigment R-KB-2 des Herstellers Kerr-Mc-Gee Pigments GmbH & Co KG genannt (CAS Nr. 1317-80-2; 13463-67-7).

Vorzugsweise wird zu den gelösten 70 bis 80 Volumenprozent an Polyurethanen PU (A) und PU (B), die sowohl als Einzelkomponenten in das Lösungsmittel oder auch als Polyurethan-Addukt in das Lösungsmittel eingebracht werden können, 0,5 bis 5 Volumenprozent (insbesondere 1 bis 3 Vol.-%) eines weiteren, in DMF löslichen Polymers (POL) gegeben.

Als ein Beispiel für das Polymer POL sei das handelsübliche Produkt Ucecoat (registriert unter 32714) genannt . In einer besonderen Ausführungsform der Erfindung wird zu den gelösten Polyurethanen PU (A) und PU (B) 0,3 bis 2,0 Volumenprozent (insbesondere 0,4 bis 1 Vol.-%) eines Vernetzungsmittels (V) gegeben, beispielsweise ein Härtemittel auf Epoxid-Basis (z. B. das handelsübliche Ucecoat T 202). Als alternatives Vernetzungsmittel können auch aromatische Polyisocyanate eingesetzt werden, beispielsweise 0,3 bis 2,0 Volumenprozent (insbesondere 0,4 bis 1 Vol.-%) einer 70-80 prozentigen Lösung eines aromatischen Polyisocyanats in Essigsäure-Ethylester. Als weiteres Beispiel eines Vernetzungsmittels kann das Produkt Imprafix der Bayer AG (Leverkusen) genannt werden, welches ein aromatische Polyisocyanat ist.

Die Erfindung betrifft auch ein Verfahren zur Herstellung einer Membran auf Kunststoffbasis, bei dem mindestens zwei verschiedene Polyurethane PU (A) und PU (B) in einem organischen Lösungsmittel (vorzugsweise DMF) gelöst mit einem pulverförmigen Pigment (WP) sowie gegebenenfalls weiteren Komponenten versetzt werden und die entstandene Lösung auf eine Oberfläche aufgetragen wird.

Die viskose Reaktionsmasse kann nach intensivem Vermischen in einer Mischmaschine nach gängigen Verfahren zu einer dünnen Membran verarbeitet werden, die dann entweder direkt eingesetzt oder aber zur Lagerung auf einen neutralen Träger wie beispielsweise ein handelsübliches Silikonpapier (z. B. NPP 1200, ein beiderseitig beschichtetes Silikonpapier der Firma B. Laufenberg Papierveredelung) aufgebracht wird. Die auf dem neutralen Träger aufgebrachte Membran kann in Form von Rollen gelagert werden.

Durch eine beispielsweise mehrtägige Lagerung (z. B. 2 bis 10 Tage, insbesondere 5 bis 8 Tage bei Raumtemperatur) lassen sich die Eigenschaften der Membran nochmals verändern. Anschließend kann die ausreagierte Membran z. B. mittels einer Kaschiermaschine auf einen anderen Träger aufgebracht werden.

Als weitere Ausführungsform der Erfindung kann die Membran nach der Lagerung durch Erhitzung bis zum Erweichungspunkt (180 bis 200 Grad C) z. B. für 1 bis 15 Minuten einem Schrumpfungsprozess unterzogen werden, der die Elastizität der Membrane deutlich verbessert. Die auf diese Weise geschrumpfte Folie (z. B. 50 prozentige Schrupfung durch die Hitzebehandlung) hat eine erhöhte Bi-Elastizität, was ein weiteres Einsatzspektrum für die Membran eröffnet.

Je nach Oberfläche haftet die Membrane selbständig auf dieser Oberfläche (z. B. beim Auftragen auf textilen Geweben) oder kann durch zusätzliche Maßnahmen befestigt werden. Hier können beispielsweise handelsübliche Kaschierklebstoffe der Textilindustrie zum Einsatz kommen. Diese zeichnen sich durch eine niedrige Viskosität und durch eine gute Hydrolyse- sowie Wärme-Beständigkeit aus. Als ein Beispiel sei ein Kaschierklebstoff auf Polyurethan-Basis "Jowatherm-Reaktant" (Hersteller Jowat Klebstoffe) genannt.

Die Erfindung betrifft ferner einen Verbundwerkstoff bestehend aus einer oder mehreren Schichten (V) eines textilen Stoffes sowie einer oder mehreren Schichten (M) aus einer Membrane wie oben beschrieben sowie gegebenenfalls weiteren Schichten.

Der Verbundwerkstoff kann die Struktur eines Sandwiches haben, bei dem die Membrane auf einer Schicht aus Viskose aufgebracht wird, unter welcher weitere textile Schichten angeordnet sind (M-V-V-.....).

Die Membrane kann aber auch zwischen textilen Schichten angeordnet sein (V-M-V-.....). Zwischen den einzelnen Schichten des Verbundwerkstoffs können gezielt Luftschichten angeordnet sein, die Membran kann jedoch auch direkt auf dem textilen Vlies aufgebracht werden.

Auf diese Weise und durch gezielte Wahl der textilen Schichten (z. B. Kombination von 100 %-Viskose mit 40 Gramm/qm sowie Viskose mit 60 Gramm/qm; Kombination von anderen Trägermaterialien) lassen sich in Verbindung mit der Membranschicht die gewünschten Werkstoffe gewinnen, die ein ideales Temperaturverhalten aufweisen und z. B. beim Einsatz im Bekleidungsbereich zu einem angenehmen Tragegefühl und Mikroklima führen.

Als Verfahren zur Aufbringung der Membran auf Textile Träger kommen u. a. Heißluft-Verschweißen, Hochfrequenz-Verschweißen und Ultraschall-Verschweißen in Frage, wobei der Einsatz von Heißluft den geringsten technischen Aufwand erforderlich macht. Insgesamt lässt sich die Membran aufgrund des hohen Schmelzgrades leicht verarbeiten und kann für viele verschiedene Gebrauchsgegenstände Verwendung finden (Kleidung, Zeltplanen, Bettwaren, Schutz- und Sportbekleidung, Verpackungsmaterialien, Tapeten, Lederwaren, etc.)

Auch lassen sich durch Aufbringen der Membrane auf nicht-textile Materialien (z. B. Verpackungsfolien, Luftpolster-Folien oder Schaumstoffe, ggf zuvor mit kleinen Löchern versehen) neue Werkstoffe gewinnen, die auch bei geringem spezifischen Gewicht eine hohe Wärmeisolierung und idealen Feuchtigkeits-Austausch ermöglichen. Auch ein Einsatz der Membran in der Automobil- und Luftfahrtindustrie ist denkbar.

Die Verwendung der erfindungsgemäßen Membran hat auch den Vorteil, dass diese umweltfreundlich hergestellt werden kann und auch die Entsorgung der beschichteten Materialien keine Schwierigkeiten bereitet. Dieses führt im Hinblick auf die strenger werdenden Umweltbestimmungen zu einem wirtschaftlichen Vorteil bei der industriellen Produktion der Membran bzw. der beschichteten Produkte.

Die Erfindung hat auch ein Verfahren zur Herstellung eines Verbundwerkstoffs (in loser und zusammengefügter Form) zum Gegenstand, bei welchem ein Verbundwerkstoff bestehend im wesentlichen aus einer oder mehreren Schichten (V) eines textilen Stoffes sowie einer oder mehreren Schichten (M) aus einer Membrane auf Kunststoffbasis hergestellt wird ausgehend von einer Lösung enthaltend mindestens zwei verschiedene Polyurethane PU (A) und PU (B) sowie ein pulverförmiges Pigment (WP) sowie gegebenenfalls weitere Komponenten.

Diese Lösung wird dann auf die Oberfläche eines vorzugsweise textilen Stoffes aufgetragen. Die Schichtdicke der Membran kann je nach Einsatzgebiet variiert werden, sie kann beispielsweise 2 bis 20 Mikrometer, insbesondere 10 Mikrometer betragen.
Die Erfindung betrifft auch die Verwendung der Membranen zur Herstellung von Überzügen auf diversen Oberflächen, z. B. auf Textilien, Leder oder Verpackungsmaterialien.

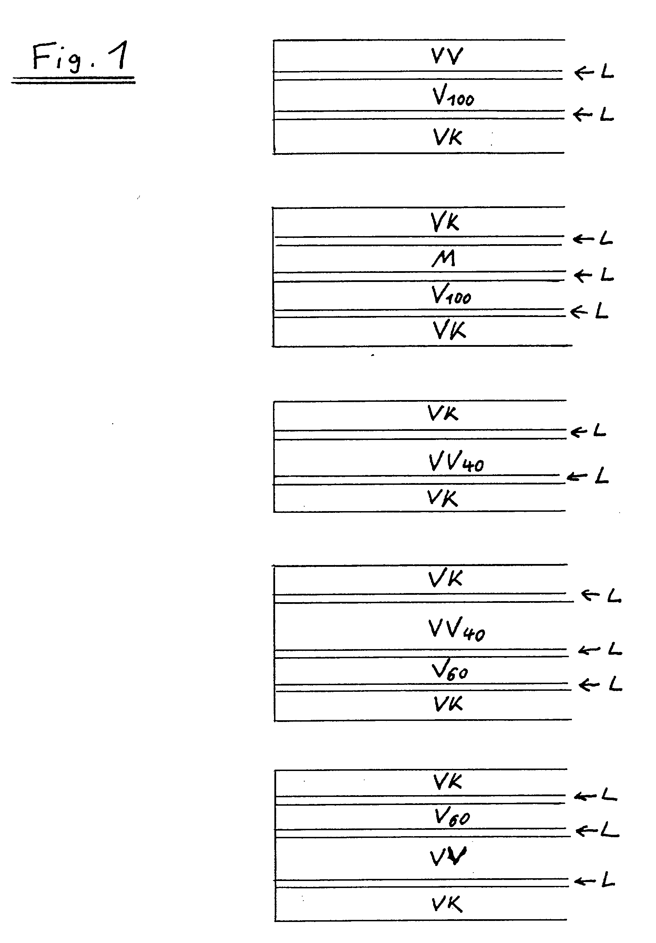

Die vorliegende Erfindung wird durch die schematische Darstellung in **Fig. 1** näher verdeutlicht.

In Fig. 1 sieht man 5 verschiedene Beispiele für mögliche Anordnungen der Schichten in erfindungsgemäßen Verbundwerkstoffen. Die Schicht-Bezeichnungen bedeuten dabei:
- Vk: 100 % Viskose
- V 60: Viskose mit Dichte 60g/qm
- V 40: Viskose mit Dichte 40g/qm
- V 100: Viskose mit Dichte 100g/qm
- M: erfindungsgemäße Membran
- L: Luftschicht
- VV: Verbund aus Membran direkt auf Viskose
- VV 40: Verbund aus Membran direkt auf Vlies mit Dichte 40g/qm

Das erste Beispiel zeigt hier eine Basisschicht aus reiner Viskose, auf der eine weitere Viskoseschicht (mit großer Dichte) aufgebracht ist, auf der wiederum ein Verbundwerkstoff-Schicht aus einer mit der Membran beschichteten Viskose aufgebracht ist. Zwischen den einzelnen Schichten ist eine dünne Luftschicht vorhanden.

**Beispiel 1A** (zur Herstellung einer vernetzten Membran(263))

Es werden 36,75 Volumenteile des handelsüblichen Polyurethans PU (A) (Hersteller UCB, Belgien; PU 50020) sowie 36,75 Volumenteile des handelsüblichen Polyurethans PU (B) (Hersteller UCB, Belgien; PU 51239) mit 20 Volumenteilen DMF vermischt. Anschließend werden 2 Volumenteile des Polymers POL-M (Hersteller UCB, Belgien) sowie 4 Volumenteile Weißpigmentpulver (Embapur 57060) zugegeben.
Nach Zugabe von 0,5 Volumenteilen Epoxitharz T 202 (Hersteller UCB) entsteht eine Membran in Form einer hochviskosen Masse, die aufgetragen werden kann.

### Beispiel 1B (zur Herstellung einer vernetzten Kunststoffmembrane)

Die Membrane wird analog aus 100 Teilen Ucecoat AB 7250, 20 Teilen DMF, 2 Teilen Ucecoat (32714), 0,5 Teilen Ucecoat T 202 und 4 Teilen Embapur 050/1101 hergestellt.

### Beispiel 2 A (zur Herstellung einer unvernetzten Membrane(262))

Es werden 38 Volumenteile des handelsüblichen Polyurethans PU (A) (Hersteller UCB) sowie 38 Volumenteile des handelsüblichen Polyurethans PU (B) (Hersteller UCB) mit 20 Volumenteilen DMF vermischt. Anschließend werden 4 Volumenteile Weißpigmentpulver ( Hersteller: Bayer AG, Leverkusen; Embapur 57060) zugegeben. Nach intensivem Verrühren entsteht das Produkt in Form einer viskosen Masse, die aufgetragen werden kann.

### Beispiel 2 B (zur Herstellung einer unvernetzten Membrane)

Die Membrane wird analog aus 100 Teilen Ucecoat AB 7250, 20 Teilen DMF, und 4 Teilen Embapur 050/1101 hergestellt.

### Beispiel 3

Nach dem Anstrich einer gewünschten Oberfläche mit den o. g. Produkten entsteht ein Mikrofilm mit erhöhtem Schmelzgrad (höher als 240 Grad). Die Oberflächenspannung ist erhöht, wodurch ein Aufbringen auf z. B. textile Flächen erleichtert ist.

Durch gezielte Wahl der gewünschten Reaktionszeit des Gemisches, Aushärtezeit, Lufteinwirkung, Lagerzeit entsteht eine ausvernetzte Oberfläche, die durch Ätzung wieder weiter-verarbeitbar wird.
Durch den Aufbau verschiedener Verbundwerkstoffe lassen sich ideale Wärmezonenverhalten realisieren.

### Beispiel 4

Durch Aufbringen der Membran auf Verpackungsfolie (mit oder ohne Luftkammern), Schaumstoff oder gewebte bzw. gewirkte Textilien lassen sich Verbundwerkstoffe mit idealem Temperatur- bzw. Feuchtigkeits-Austauschverhalten gewinnen.

Gemäß Beispiel 4a) wurde die etwa 0,2 mm dicke Membrane auf eine 3 mm dicke Schaumstoff-Schicht aufgetragen, die auf der anderen Seite mit einer 1,5 mm dicken Charmeuse (Gewirke) verbunden ist (Charmeuse-Schaumstoff Membrane).
Gemäß Beispiel 4b) wurde die etwa 0,2 mm dicke, Wasserdampf-durchlässige Polyurethan-Membrane beiderseitig auf eine Schaumstoff-Schicht aufgetragen (Membrane-Schaumstoff-Membrane).

Gemäß Beispiel 4c) wurde die etwa 0,2 mm dicke Membrane auf eine Schaumstoff-Schicht aufgespritzt, die auf der anderen Seite mit einer genadelten (d.h. mit kleinen Löchern versehenen) Charmeuse (Gewirke, Vlies) verbunden ist (Charmeuse-Schaumstoff-Membrane).

Gemäß Beispiel 4d) wurde die Membrane auf eine Verpackungsfolien-Schicht aufgetragen, die zuvor genadelt (d.h. mit kleinen Löchern versehen) wurde, um sie atmungs-aktiv zu machen (Kunststoffolie-Membrane).

Gemäß Beispiel 4e) wurde die Membrane auf eine textiles Vlies aufgetragen, das zuvor genadelt (d.h. mit kleinen Löchern versehen) wurde, um es atmungs-aktiv zu machen (Vlies-Membrane).

Gemäß Beispiel 4f) wurde die Membrane auf eine Vlies-Schicht aufgetragen, die zuvor mit einer Charmeuse verbunden wurde (Charmeuse-Vlies-Membrane).

## Patentansprüche

1. Membran auf Kunststoffbasis herstellbar ausgehend von mindestens 70 Volumenprozent zweier Polyurethane PU (A) und PU (B) sowie 2 bis 10 Volumenprozent eines pulverförmigen Pigments (WP) sowie gegebenenfalls weiteren Komponenten.

2. Membran gemäß Anspruch 1, **dadurch gekennzeichnet, dass** die Polyurethane PU (A) und PU (B) in einem Volumenverhältnis von etwa 1 zu 1 eingesetzt werden .

3. Membran gemäß einem der Ansprüche 1 oder 2, **dadurch gekennzeichnet, dass** die Polyurethane in Dimethylformamid gelöst und mit dem pulverförmigen Pigment (WP) sowie ggf. weiteren Komponenten versetzt werden.

4. Membran gemäß einem der Ansprüche 1 bis 3, **dadurch gekennzeichnet, dass** zu den gelösten Polyurethanen PU (A) und PU (B) 0,5 bis 5 Volumenprozent eines weiteren, in DMF löslichen Polymers (POL) gegeben werden.

5. Membran gemäß einem der Ansprüche 1 bis 4, **dadurch gekennzeichnet, dass** zu den gelösten Polyurethanen PU (A) und PU (B) 0,3 bis 2,0 Volumenprozent eines Vernetzungsmittels (V) gegeben werden.

6. Verfahren zur Herstellung einer Membran auf Kunststoffbasis, **dadurch gekennzeichnet, dass** mindestens zwei verschiedene Polyurethane PU (A) und PU (B) in einem organischen Lösungsmittel gelöst mit einem pulverförmigen Pigment (WP) sowie gegebenenfalls weiteren Komponenten versetzt werden und die entstandene Lösung auf eine Oberfläche aufgetragen wird.

7. Verbundwerkstoff bestehend aus einer oder mehreren Schichten (V) eines textilen Stoffes sowie einer oder mehreren Schichten (M) aus einer Membran gemäß einem der Ansprüche 1 bis 5 sowie gegebenenfalls weiteren Schichten.

8. Verbundwerkstoff bestehend aus einer oder mehreren Schichten (V) eines nicht-textilen Stoffes sowie einer oder mehreren Schichten (M) aus einer Membran gemäß einem der Ansprüche 1 bis 5 sowie gegebenenfalls weiteren Schichten

9. Verfahren zur Herstellung eines Verbundwerkstoffs bestehend im wesentlichen aus einer oder mehreren Schichten (V) eines textilen Stoffes sowie einer oder mehreren Schichten (M) aus einer Membran auf Kunststoffbasis, **dadurch gekennzeichnet, dass** eine Lösung enthaltend mindestens zwei verschiedene Polyurethane PU (A) und PU (B) sowie ein pulverförmiges Pigment (WP) sowie gegebenenfalls weitere Komponenten auf die Oberfläche eines textilen Stoffes aufgetragen wird.

10. Verfahren zur Herstellung eines Verbundwerkstoffs bestehend im wesentlichen aus einer oder mehreren Schichten (V) eines nicht-textilen Stoffes sowie einer oder mehreren Schichten (M) aus einer Membran auf Kunststoffbasis, **dadurch gekennzeichnet, dass** eine Lösung enthaltend mindestens zwei verschiedene Polyurethane PU (A) und PU (B) sowie ein pulverförmiges Pigment (WP) sowie gegebenenfalls weitere Komponenten auf die Oberfläche eines nicht-textilen Stoffes aufgetragen wird.
